## Europäisches Patentamt
## European Patent Office
## Office européen des brevets

(11) Veröffentlichungsnummer: **0 104 535**
**B1**

(12) **EUROPÄISCHE PATENTSCHRIFT**

(45) Veröffentlichungstag der Patentschrift:
29.04.87

(51) Int. Cl.⁴: **F 16 C 9/04,** F 16 C 5/00

(21) Anmeldenummer: **83109012.1**

(22) Anmeldetag: **13.09.83**

(54) Verbindungsstange, insbesondere Pleuelstange.

(30) Priorität: **27.09.82 US 423756**

(43) Veröffentlichungstag der Anmeldung:
**04.04.84 Patentblatt 84/14**

(45) Bekanntmachung des Hinweises auf die Patenterteilung:
**29.04.87 Patentblatt 87/18**

(84) Benannte Vertragsstaaten:
**AT BE CH DE FR GB IT LI SE**

(56) Entgegenhaltungen:
**DE-A-1 962 325**
**DE-A-2 737 157**
**DE-A-2 801 617**

(73) Patentinhaber: **DEERE & COMPANY, 1 John Deere Road, Moline Illinois 61265 (US)**

(72) Erfinder: **Campbell, Gary Lee Mr., 8543 Hammond Avenue, Waterloo Iowa 50701 (US)**

(74) Vertreter: **Feldmann, Bernhard, DEERE & COMPANY European Office, Patent Department Steubenstrasse 36- 42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Verbindungsstange, insbesondere Pleuelstange, mit einem Schaft, einem sich daran anschließenden Stangenfuß und einem mit letzterem verbindbaren Stangendeckel, wobei der Stangenfuß und der Stangendeckel halbkreisförmig ausgebildet sind und an den Endseiten von Auslegern zu deren Verbindung jeweils einen Vorsprung bzw. eine Aussparung aufweisen, die mit seitlichen Oberflächen versehen sind und an einer Verbindungsstelle einen Pressitz bilden.

Bei einer derartigen Verbindungsstange ist die Verbindung zwischen dem anderen Vorsprung und der zugehörigen Aussparung als Spielpassung ausgebildet (John Deere Service Grundlagen Motoren-Ausgabe 1968 - Seite 2 bis 47). Hierdurch müssen der Stangenfuß und der Stangendeckel genau zueinander ausgerichtet werden. Beim Anziehen der Stangenfuß und Stangendeckel miteinander verbindenden Schrauben, deren Verbiegen durch die Keil-Nutenverbindung bzw. durch die in die Aussparungen eingreifenden Vorsprünge verhindert werden soll, kann aber bei fehlerhafter Ausrichtung ein Verkanten des Stangendeckels und damit ein erhöhter Verschleiß an dem zwischen Stangenfuß und Stangendeckel aufgenommenen Gleitlager auftreten und sogar unter Umständen ein Motorschaden, wenn das erforderliche Spiel, etwa zwischen Kurbelwelle und Pleuelstange, zu gering wird.

Bei einer ebenfalls bekannten Verbindungsstange (DE-A-2 801 617) sind um die Verbindungsstellen am Stangendeckel dünnwandige, konisch verlaufende Stege in Kreisform vorgesehen, die mit entsprechend konisch verlaufenden Flächen am Stangenfuß zusammengefügt weiden und somit dort einen elastischen auf Biegung beanspruchten Verformungsbereich bilden, die bei längerem Einsatz starke Ermüdungserscheinungen aufweisen und damit ihre Wirkungverlieren.

Die mit der Erfindung zu lösende Aufgabe wird darin gesehen, eine positive und ein Verkanten ausschließende Anordnung des Stangendeckels am Stangenfuß zu ermöglichen.

Diese Aufgabe ist gemäß der Erfindung dadurch gelöst worden, daß der innere Abstand der Aussparungen bzw. Vorsprünge bzw. der Aussparung zum Vorsprung am Stangenfuß kleiner ist, als der innere Abstand der Vorsprünge bzw. Aussparungen bzw. des Vorsprungs zur Aussparung am Stangendeckel, wobei die Breite einer Aussparung etwas größer ist, als die Breite des mit ihr zu verbindenden Vorsprungs. Auf diese Weise wird ein fehlerhaftes Ausrichten des Stangendeckels gegenüber dem Stangenfuß positiv ausgeschlossen und damit auch ein eventuelles Verkanten des Stangendeckels, was sich bei einer Anwendung bei Pleuelstangen für Verbrennungsmotore in einer erhöhten Lebensdauer auswirkt. Im einzelnen wird durch eine derartige Verbindung der Stangenfuß leicht auf Zug und der Stangendeckel leicht auf Druck beansprucht, das heißt, es besteht eine Tendenz, den Stangenfuß auseinander- und den Stangendeckel zusammenzudrücken. Im ganzen gesehen ist dadurch der Stangendeckel positiv mit dem Stangenfuß festgelegt, und zwar durch die Metall zu Metall Berührungen an den Verbindungsstellen.

Zweckmäßig ist nach der Erfindung eine Verbindungsstelle dem Schaft zugelegt, die andere Verbindungsstelle dem Schaft abgelegen, und bei der dem Schaft abgelegenen Verbindungsstelle ist die Breite der Aussparung etwas größer als die Breite des Vorsprungs.

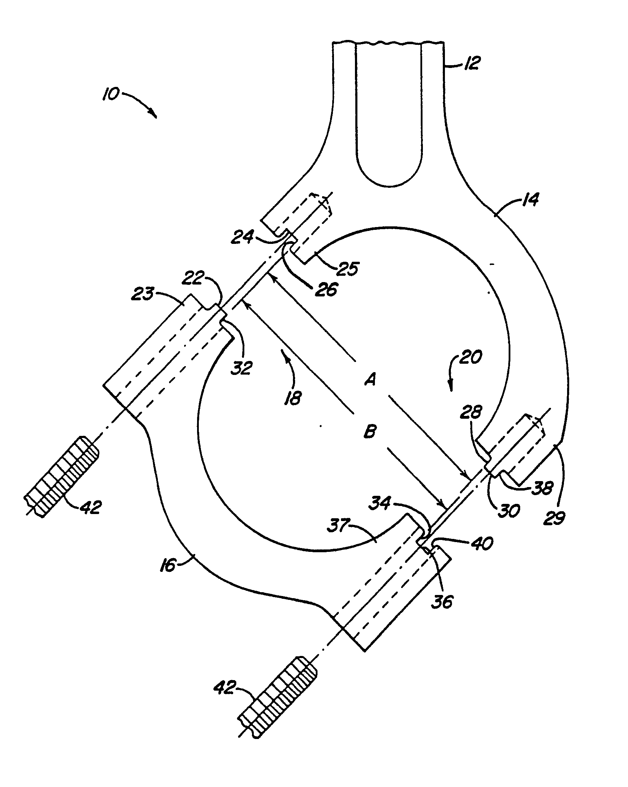

In der Zeichnung ist eine nachfolgend näher erläuterte Verbindungsstange nach der Erfindung dargestellt.

Eine Verbindungsstange 10 in Form einer Pleuelstange für Verbrennungsmotore weist einen Schaft 12, einen Stangenfuß 14 und einen Stangendeckel 16 auf. Stangenfuß 14 und Stangendeckel 16 liegen an ihren Verbindungsstellen 18 und 20 gegeneinander an und nehmen in ihrer Innenausnehmung zwei geteilte, in der Zeichnung nicht dargestellte Lagerschalen auf. Die dem Schaft 12 zugelegene Verbindungsstelle 18 ist mit einem Vorsprung 22 versehen, der an einem Ausleger 23 des Stangendeckels 16 vorgesehen ist und in eine Aussparung 24 in einem Ausleger 25 des Stangenfußes als Pressitz eingreift.

Die dem Schaft 12 abgelegene Verbindungsstelle 20 ist anstelle des herkömmlichen Spielsitzes in Form von Aussparung und Vorsprung als Schnappsitz ausgebildet. Im einzelnen ist hierzu an einem Ausleger 29 des Stangenfußes 14 ein Vorsprung 30 vorgesehen, der in eine Aussparung 36 in einem Ausleger 37 des Stangendeckels 16 eingreifen kann, wobei die Abstandsverhältnisse derart gewählt sind, daß der Abstand "A" zwischen der innenliegenden Oberfläche 26 der Aussparung 24 und der innenliegenden Oberfläche 28 des Vorsprungs 30 am Ausleger 29 etwas kleiner ist, als der Abstand "B" zwischen der innenliegenden Oberfläche 32 des Vorsprungs 22 und der innenliegenden Oberfläche 34 der Aussparung 36 im Ausleger 37 des Stangendeckels 16. Gleichzeitig ist die Breite der Aussparung 36 etwas größer gestaltet als die Breite des Vorsprungs 30, so daß die außenliegenden Oberflächen 38 und 40 des Vorsprungs 30 und der Aussparung 36 sich beim Einsetzen nicht behindern.

Um den Stangendeckel 16 mit dem Stangenfuß 14 zu verbinden, wird der Stangendeckel 16 zunächst über auf Schrauben 42 aufgeschobene Federpassringe, die in der Zeichnung nicht wiedergegeben sind, lose zu dem Stangenfuß 14 ausgerichtet, wonach der Vorsprung 22 in die Aussparung 24 gedrückt wird, wodurch der vorerwähnte Pressitz an der Verbindungsstelle 18 entsteht. Danach wird die abgelegene Verbindungsstelle 20 geschlossen, indem die Oberflächen 28 und 34 gegeneinander schnappen und der Vorsprung 30 in die Aussparung 36 eingreift. Durch eine derartige Verbindung wird der Stangenfuß 14 leicht auf Zug und der Stangendeckel 16 leicht auf Druck beansprucht, das heißt, es besteht eine Tendenz, den Stangenfuß auseinander- und den Stangendeckel zusammenzudrücken. Im ganzen gesehen ist dadurch der Stangendeckel 16 positiv mit dem Stangenfuß 14 festgelegt, und zwar durch die Metall zu Metall Berührungen an den Verbindungsstellen 18 und 20, wobei aber eine übergroße störende Beeinflussung, die den positiven Sitz des Stangendeckels 16 am Stangenfuß 14 behindern könnte, vermieden wurde.

**Patentansprüche**

1. Verbindungsstange (10), insbesondere Pleuelstange, mit einem Schaft (10), einem sich daran anschließenden Stangenfuß (14) und einem mit letzterem verbindbaren Stangendeckel (16), wobei der Stangenfuß (14) und der Stangendeckel (16) halbkreisförmig ausgebildet sind und an den Endseiten von Auslegern (23, 25, 29, 37) zu deren Verbindung jeweils einen Vorsprung (22, 30) bzw. eine Aussparung (24, 36) aufweisen, die mit seitlichen Oberflächen (26, 28, 32, 34, 38, 40) versehen sind und an einer Verbindungsstelle (18) einen Pressitz bilden, dadurch gekennzeichnet, daß der innere Abstand (A) der Aussparungen (24) bzw. Vorsprünge (30) bzw. der Aussparung (24) zum Vorsprung (30) am Stangenfuß (14) kleiner ist, als der innere Abstand (B) der Vorsprünge (22) bzw. Aussparungen (36) bzw. des Vorsprungs zur Aussparung am Stangendeckel (16), wobei die Breite einer Aussparung (36) etwas größer ist, als die Breite des mit ihr zu verbindenden Vorsprungs (30).

2. Verbindungsstange nach Anspruch 1, dadurch gekennzeichnet, daß eine Verbindungsstelle (18) dem Schaft (10) zugelegen, die andere Verbindungsstelle (20) dem Schaft (10) abgelegen ist und bei der dem Schaft (10) abgelegenen Verbindungsstelle (20) die Breite der Aussparung (36) etwas größer ist als die Breite des Vorsprungs (30).

**Claims**

1. Connecting rod (10), in particular a connecting rod for internal combustion engines, having a shank (10), a foot (14) adjoining the shank and a cap (16) connectable to the rod foot (14) and the cap (16) being of semi-circular form and each having a projection (22, 30) or a recess (24, 36), respectively, at the end faces of terminal arms (23, 25, 29, 37) for their connection, the projections and recesses being provided with lateral surfaces (26, 28, 32, 34, 38, 40) and forming a press fit at one connection point (18), characterised in that the inner distance (A) of the recesses (24) or projections (30) or of the recess (24) to the projection (30) on the rod foot (14) is smaller than the inner distance (B) of the projections (22) or recesses (36) or of the projection to the recess on the rod cap (16), the width of a recess (36) being a little greater than the width of the projection (30) to be connected to it.

2. Connecting rod according to claim 1, characterised in that one connection point (18) is located close to the shank (10), the other connection point (20) is located remote from the shank (10) and in the case of the connection point (20) remote from the shank (10) the width of the recess (36) is a little greater than the width of the projection (30).

**Revendications**

1.- Barre d'assemblage (10), en particulier bielle, comportant une tige (10), un pied (14) qui s'y raccorde et un chapeau (16) pouvant être relié à ce dernier, le pied (14) et le chapeau (16) ayant une conformation semi-circulaire et comportant sur chacune des faces terminales de bras (23, 25, 29, 37), pour leur assemblage, une saillie ou protubérance (22, 30) ou respectivement un évidement (24, 36) qui comportent des surfaces latérales (26, 28, 32, 34, 38, 40) et constituent, à un point de liaison (18), un ajustement serré, caractérisée en ce que la distance intérieure (A) entre les évidements (24) ou les saillies (30) ou bien entre l'évidement (24) et la saillie (30) sur le pied (14) est inférieure à la distance intérieure (B) entre des saillies (22) ou les évidements (36) ou bien entre la saillie et l'évidement sur le chapeau (16), la largeur d'un évidement (36) étant un peu supérieure à la largeur de la saillie (30) qui doit être assemblée avec lui.

2.- Barre d'assemblage suivant la revendication 1, caractérisée en ce qu'un point de liaison (18) est rapproché de la tige (10), tandis que l'autre point de liaison (20) est éloigné de la tige (10), et en ce qu'au point de liaison (20) éloigné de la tige (10) la largeur de l'évidement (36) est un peu supérieure à la largeur de la saillie (30).